# EUROPEAN PATENT SPECIFICATION

(11) **EP 2 501 081 B1**
(45) Date of publication and mention of the grant of the patent: **26.11.2014**
(21) Application number: 11305298.9
(22) Date of filing: 17.03.2011
(51) Int. Cl.: H04L 12/46, H04W 8/12

(54) **System and Method for Data Roaming**
System und Verfahren für Datenroaming
Système et procédé pour itinérance de données

(43) Date of publication of application: 19.09.2012
(73) Proprietor: Buzzinbees Sas, 38170 Seyssinet Pariset (FR)
(72) Inventor: Bouckaert, Philippe, 06410 Biot (FR); Lamberton, Marc, 06600 Antibes (FR); Mansutti, David, 06560 Valbonne (FR)
(74) Representative: Hautier, Nicolas

(56) References cited:
- WO-A2-2008/011027
- US-A1- 2008 101 366
- US-B1- 7 325 058

## Description

The technical domain of the invention is the domain of mobile telecom networks, and particularly roaming, that is the ability for a user registered with a home telecom network to get access to a network service through a visited telecom network.

Such a roaming ability is useful, e.g. when said user is travelling outside the geographical coverage area of its home telecom network, cannot connect via the home telecom network, but can instead connect to a visited telecom network.

A telecom network is for instance described in the document WO2008/101366.

Roaming may be applied to three main types of mobile services: voice, SMS and data. The present application concentrates on data services.

Since the home and visited telecom networks are interconnected, they can supply roaming services to the user, as soon as they have negotiated mutual roaming agreements. Data services may then be supplied by the home telecom network and relayed to the user via the visited telecom network.

One important drawback of such an approach is that services are charged to the user depending generally to the amount of data transmitted and also to the distance. When the traffic is conveyed via the home telecom network and via the visited network, said distance can be important and lead to high and unpredictable bills. This is hardly accepted by the user who is used to low and predictable costs when using data services from its home telecom network.

Since most data services, such as e.g. Internet, Mail, etc, are connected to the Internet, they are accessible from everywhere. One of the solutions is to offer said data services locally.

Several embodiments are known to provide local data services to a roaming user.

A first embodiment is a temporary local subscription allowing for more attractive charging rates. In that case, the visited telecom network directly offers data services to the roaming user. A drawback of said first embodiment is that one subscription must be contracted for each telecom network location the user intends to visit. Moreover, this is typically achieved by providing the user with a new SIM card dedicated to the visited telecom network. The user then have to swap visited SIM card and home SIM card, with an added drawback being that the user cannot receive voice call nor SMS on its home number when using visited SIM card.

A second embodiment allows the user to access data services directly and locally through a visited gateway serving node to the data service existing in the visited telecom network. The limitation of such an approach comes from the fact that data services are typically accessed using access point name comprising address toward data service, and that the visited telecom network and the home telecom networks do not necessary use the same identifiers in these addresses. This leads to the drawback that the visited and the home telecom networks need to conclude agreements to configure common address identifiers with common capabilities in their respective networks. Without such agreement, an access point name requested by a user has no chance to be resolved locally by the visited gateway serving node.

One object of the invention is to provide a roaming user with the advantages of such a temporary local subscription when possible, without the drawbacks of prior art, that is, without any constraint on the access point name identifier and without any impact on the user's mobile set configuration, that is without any setting up, either manual or automatic, of the user's mobile set.

This offers a seamless user experience to a subscribing roamer that is also able to receive voice calls, SMSs, or data notification from its home telecom network, since its identifying number, e.g. MSISDN, has not been modified.

The invention concerns a data roaming system, DRC, in a telecom network infrastructure, to allow a user's mobile set, registered with a home telecom network, to get access to a network service, such as the ones offered by a packet data network, through a visited telecom network, comprising:
- a visited serving support node, located in said visited telecom network, adapted to establish a connection with said user's mobile set, and to communicate with it using a telecom protocol,
- a visited gateway support node, located in said visited telecom network, adapted to interwork the visited telecom network with the packet data network, that is, to bi-directionally translate and exchange traffic between said telecom protocol used by visited telecom network and a packet data protocol used by said packet data network,

- a home gateway support node, located in said home telecom network, adapted to interwork the home telecom network with the packet data network,
- a tunnelling proxy located in said visited telecom network, adapted to intercept control tunnelling traffic coming from said visited serving support node and to redirect it either to said visited gateway support node or to said home gateway support node.

Optionally, the invention may comprise at least one of the following features:
a first domain name server looked up by said visited serving support node modified the following way:
   - a look-up from the visited serving support node to a local access point name, that is, an access point name whose name can be resolved locally in the visited telecom network, is resolved into a visited gateway support node address,
   - a look-up from the visited serving support node to a foreign access point name is resolved into a tunnelling proxy address,
and a second domain name server looked up by said tunnelling proxy modified the following way:
   - a look-up from the tunnelling proxy to a foreign access point name is resolved into a home gateway support node address,

in order to allow said interception of tunnelling traffic.

According to another feature of the invention, said tunnelling proxy is further adapted to modify the access point name requested by the user's mobile set, so that it designates the same data service, but in a format understandable by said visited gateway support node, at least while control tunnelling traffic is redirected to said visited gateway support node.

According to another feature of the invention, said tunnelling proxy is further adapted to replace the MSISDN number of the user's mobile set to a visited MSISDN number, at least while control tunnelling traffic is redirected to said visited gateway support node.

According to another feature of the invention, said tunnelling proxy is further adapted to force a tunnel setup toward a selfcare access point name in charge of managing subscription and credit of the user's mobile set, if said user's mobile set has not yet subscribed to the data roaming system or has no more credit.

According to another feature of the invention, said tunnelling proxy is further adapted to delete said forced tunnel at the end of a session with said selfcare access point name.

According to another feature of the invention, the system further comprises:
a signalling proxy located in said visited telecom network, able to intercept mobility management signalling traffic coming from a home location register to said visited serving support node, and to replace herein any foreign access point name by a corresponding local access point name that can be understood and handled by said visited gateway support node.

Another subject matter of the present invention is a method of data roaming in a telecom network infrastructure, to allow a user's mobile set, registered with a home telecom network, to get access to a network service, such as the ones offered by a packet data network, through a visited telecom network, comprising the following steps:
- establishing a connection with said user's mobile set through a visited serving support node located in said visited telecom network, and communicating with said user's mobile set using a telecom protocol,
- interworking the visited telecom network with the packet data network through a visited gateway support node located in said visited telecom network, which comprises bi-directionally translating and exchanging traffic between said telecom protocol used by visited telecom network and a packet data protocol used by said packet data network,
- interworking the home telecom network with the packet data network through a home gateway support node located in said home telecom network, which comprises bi-directionally translating and exchanging traffic between said telecom protocol used by home telecom network and a packet data protocol used by said packet data network.

Advantageously, the method further comprises the following steps:
- intercepting control tunnelling traffic coming from said visited serving support node through a tunnelling proxy located in said visited telecom network, and redirecting said control tunnelling traffic either to said visited gateway support node or to said home gateway support node.

Others features, details and advantages of the invention will become more apparent from the detailed illustrating description given hereafter with respect to the drawings on which:
- figure 1 is a schematic view of a network architecture according to the invention,
- figure 2 is a flow diagram of a system comprising a tunnelling proxy,
- figure 3 is a flow diagram of a system comprising a signalling proxy.

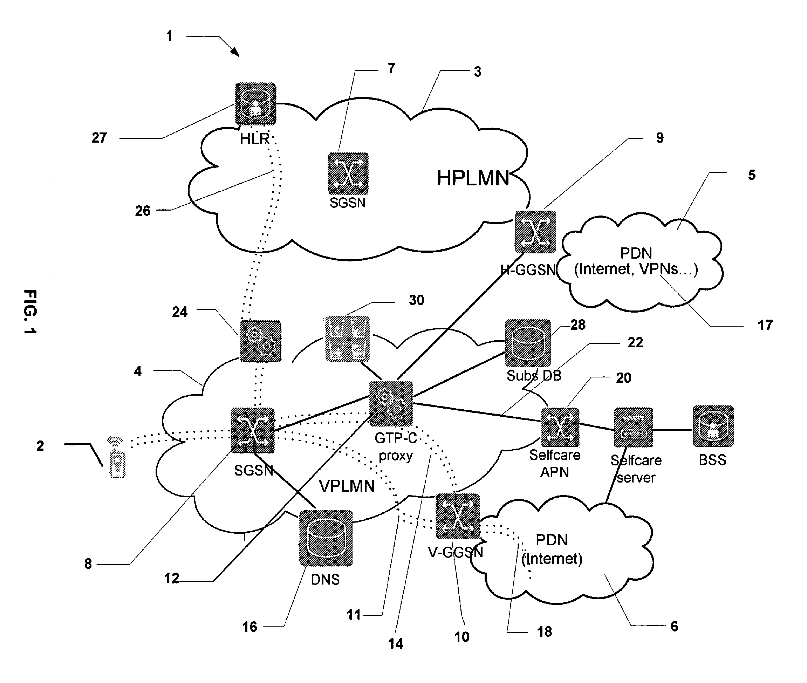

According to figure 1, figuring an illustrative network infrastructure in which a data roaming system 1, DRC, according to the invention, can typically takes place, is shown a user's mobile set 2, a home telecom network 3, and a visited telecom network 4. Both home and visited telecom network can be e.g. public land mobile network, PLMN. They can be respectively denoted, HPLMN, with an "H" letter being used in the present application to denote what is related to home and VPLMN, with a "V" letter being used in the present application to denote what is related to visited.

The user's mobile set 2 is registered with and usually uses said home telecom network 3. In a known fashion, when in the radio vicinity of said home telecom network 3, the user's mobile set normally connects with the home telecom network 3 by establishing a connection through a serving support node 7, here a home serving support node 7, H-SGSN, in charge of managing connection with the user's mobile set 2. When the user's mobile set 2 intends to use data services, it makes a request to establish a connection to a packet data network 5, PDN. The data service requested is indicated by means of an access point name 17, APN. A tunnel is then established between the home serving support node 7, connected to the user's mobile set 2, and the requested access point name 17 through a gateway support node 9, here a home gateway support node 9, H-GGSN, in charge of interworking said home telecom network 3 with said packet data network 5. This includes a bi-directional translation and exchange of traffic between a telecom protocol used by said home telecom network 3 and a packet data protocol, PDP, used by said packet data network 5.

When the invention is used, the user's mobile set 2 is not in the home telecom network geographical area of coverage and cannot connect directly to said home serving support node 7. Instead, it is supposed that the user's mobile set 2 is in the geographical area of coverage of another telecom network, called herein a visited telecom network 4. The user's mobile set 2 can thus connect to said visited telecom network 4. Said connection is made through a corresponding serving support node 8. Since said local serving support node 8, SGSN, pertains to the visited telecom network 4, it is named a visited serving support node 8, V-SGSN.

The wording "local" is used in the present application to refer to said visited telecom network 4 or its components, as opposed to "foreign".

According to the invention, when the user's mobile set 2 requires a data service, a request is made by said user's mobile set 2, the same manner as when directly requesting the home telecom network 3, to establish a connection to a packet data network 6, PDN. In exactly the same manner, said data service is requested by means of an access point name 18, APN.

It has to be noted here, that despites figure 1 shows a first packet data network 5 interfaced to the home telecom network 3 through the home gateway serving node 9 and a second packet data network 6 interfaced to the visited telecom network 4 through the visited gateway serving node 10, said packet data networks 5, 6 may be either separate distinct packet data networks or according to some embodiments, may be two connected parts of a same single packet data network 5, 6.

The principle of the invention is to have a tunnel 11 established in the visited telecom network 4, kept locally, and fully handled by the visited telecom network 4.

Said tunnel 11 is established, wherever possible, between the visited serving support node 8, connected to the user's mobile set 2, and the requested access point name 18, through a gateway support node 10, here a visited gateway support node 10, V-GGSN, in charge of correspondingly interworking said visited telecom network 4 with said packet data network 6.

Said tunnel 11 can be established, in a way transparent to the user's mobile set 2, thanks to the presence of a tunnelling proxy 12. Said tunnelling proxy 12 is preferably located in said visited telecom network 4.

Said tunnelling proxy 12 is in charge of intercepting control tunnelling traffic 14. Said control tunnelling traffic 14 is a signalling traffic, exchanged between said visited serving support node 8 and said visited gateway support node 10, in an attempt to setup a tunnel 11 between them toward an access point name 18. Said control tunnelling traffic 14 follows the request from the user's mobile set 2 requiring a data service and a connection to a packet data network 6, PDN.

Depending of the content of an access point name contained and defining said data service request, the tunnelling proxy 12, eventually modifies the intercepted control tunnelling traffic 14, and selectively redirects it from said visited serving support node 8 either to said visited gateway support node 10 or to said home gateway support node 9.

If possible, and preferably, said control tunnelling traffic 14 is directed toward said visited gateway support node 10, which is local, so as to set up a local tunnel 11 between the visited serving support node 8 and the visited gateway support node 10. By doing so, the data service request from user's mobile set 2, is advantageously locally answered.

Either, if for any reason, this is not possible, said control tunnelling traffic 14 is deviated and directed toward said home gateway support node 9, so as to set up a distant tunnel (not figured) between the visited serving support node 8 and the home gateway support node 9. By doing so, the data service request from the user's mobile set 2, is assured to be positively answered.

The principle is to preferably answer the data service request locally when possible, and when it is not possible, to answer it through the home gateway support node 9, which is quite assured to be able to provide the requested data service.

The use of such a tunnelling proxy 12 provides a transparent optimized selection while guaranteeing the result of providing the data service to the user's mobile set 2.

Said tunnelling proxy 12 can be a node in said visited telecom network 4. It can thus be implemented as an independent device in said network, connected to the others components of said network infrastructure. It is obvious for the one skilled in the art that said tunnelling proxy 12 can be implemented as a combination of hardware, software or both types of component in order to provide the whole function. It is also obvious that said tunnelling proxy 12 can be parted into several components spread over several nodes of said visited telecom network 4 and communicating between them to provide the whole function.

Said tunnelling proxy 12 is introduced in said data roaming system, DRC, and is able to intercept said control tunnelling traffic 14, thanks to a modification applied to at least one domain name server 16, DNS. A domain name server 16, as is known in the art, is a server in the network architecture that can resolve an address. It can be seen as a look up table providing as output an effective address allowing a reach, when given in input a symbolic or reduced address or indication of a destination.

A first domain name server 16 that has to be modified is the domain name server 16 that is looked up by said visited serving support node 8 when trying to reach a local access point name 18, and to setup a tunnel 11. Said domain name server may be modified at least two ways.

When the visited serving support node 8 looks up to a local access point name 18, it gets in return an address pointing toward said visited gateway support node 10. By doing so, the tunnelling proxy 12 is not introduced in the tunnelling traffic that is already locally processed by tunnelling through the visited gateway support node 10.

On the contrary, when the visited serving support node 8 look up to a foreign access point name 17, it gets in return an address pointing toward said tunnelling proxy 12.

A second domain name server 16 that has to be modified is the domain name server 16 that is looked up by said tunnelling proxy 12. Said domain name server may be modified at least the following way.

When the tunnelling proxy 12 looks up to a foreign access point name 17, it gets in return an address pointing toward said home gateway support node 9.

Both first and second domain name servers can be either separated or mixed in a single one, as illustrated on figure 1.

It then appears that the preferential connection through a visited gateway support node 10, instead of a home gateway support node 9, is only possible for a local access point name 18 and not for a foreign access point name 17.

A local access point name 18 indicates a data service in a packet data network 5, 6, that can be accessed through a local visited gateway support node 10. Said access can be effective either by directly using the access point name 18 and its identifiers as provided by the user's mobile set 2, or by translating the access point name 18 or its identifiers, in order to address a same or equivalent data service, but in a form accessible locally through a visited gateway support node 10.

On the contrary, a foreign access point name 17 indicates a data service in a packet data network 5, 6, that cannot be, for any reason, accessed through a local visited gateway support node 10, and that must be accessed through a home gateway support node 9.

A local access point name 18 is thus an access point name whose name can be resolved locally in the visited telecom network 4. On the contrary a foreign access point name 17 is an access point name whose name cannot be resolved locally in the visited telecom network 4, and that must be accessed through another telecom network, such as e.g. the home telecom network 3.

The data roaming system then acts the following way. When an access point name can be locally resolved, a tunnel is directly and locally established between the visited serving support node 8 and the local access point name 18 through the visited gateway support node 10. When an access point name cannot be locally resolved, the control tunnelling traffic 14 is intercepted by the tunnelling proxy 12 and redirected to the home gateway support node 9 and a tunnel is remotely established between the visited serving support node 8 and the foreign access point name 17 through the home gateway support node 9.

The tunnelling proxy 12 only intercepts and eventually redirects control tunnelling traffic 14. User tunnelling traffic is directly established between serving support nodes 8 and gateway support nodes 9, 10.

According to an embodiment of the invention, the tunnelling proxy 12 may also be in charge of modifying the access point name 18 requested by the user's mobile set 2. The modification is intended to replace said access point name 17 expressed in a format and syntax normally used by the user's mobile set 2 when using its home telecom network 3, by an access point name 18 designating the same data service, but expressed in a format and syntax that are understandable by the visited gateway support node 10. This may be done at least while control tunnelling traffic 14 is redirected to said visited gateway support node 10. By doing so, the request to access the data service can directly be accepted and treated by the visited gateway support node 10.

Every user's mobile set 2 is identified with at least two identifiers. A first identifier is an international mobile subscriber identity, IMSI. IMSI is a unique number associated with all network mobile phone users. It is stored in the SIM inside the mobile set 2 and is sent by the mobile set 2 to the telecom network 3, 4. It is also used for acquiring other details about the mobile set 2 from the home location register 27, HLR. It may be locally copied in a visited location register.

A second identifier is MSISDN. MSISDN is a number uniquely identifying a subscription in a mobile network. Simply put, MSISDN is the telephone number to a SIM card/mobile set. IMSI identifies a SIM and cannot be changed. MSISDN is used to route calls to a user's mobile set and can be modified.

According to an embodiment of the invention, the tunnelling proxy 12 may also be in charge of replacing the MSISDN number of the user's mobile set 2 to a visited MSISDN number. This may be done at least while control tunnelling traffic 14 is redirected to said visited gateway support node 10. By doing so, the request to access the data service defined by the access point name 18 is seen by the visited gateway support node 10 as if it came from a locally registered user's mobile set 2, and may thus be better accepted and treated.

Said local MSISDN is typically set to a MSISDN configured for this user's mobile set 2, during a subscription to the roaming service. Said local MSISDN also allows the system to charge the roaming service.

The charging may depend on the way the user has subscribed to the data roaming service. In the case the user has subscribed to the data roaming service through the visited network, the data roaming service may be charged to the user to his account on said visited network. In the other case, the user may be charged to his home network account.

The data roaming service can be offered transparently to user's mobile sets 2, as part e.g. of their initial home registration with no additional cost or operation. However, both the home telecom network 3 and the visited telecom network 4 may wish to charge for such a data roaming service. In that case a subscription to the data roaming service may be used to get access to the data roaming service. According to an embodiment, said subscription may be contracted locally between the user's mobile set 2 and each visited telecom network 4. Advantageously, a global subscription may be contracted between the user's mobile set 2 and the data roaming system/service itself.

In such case, before allowing data roaming, the data roaming system may check if a given requesting user's mobile set 2 has subscribed, and when it applies, if it has some credit left.

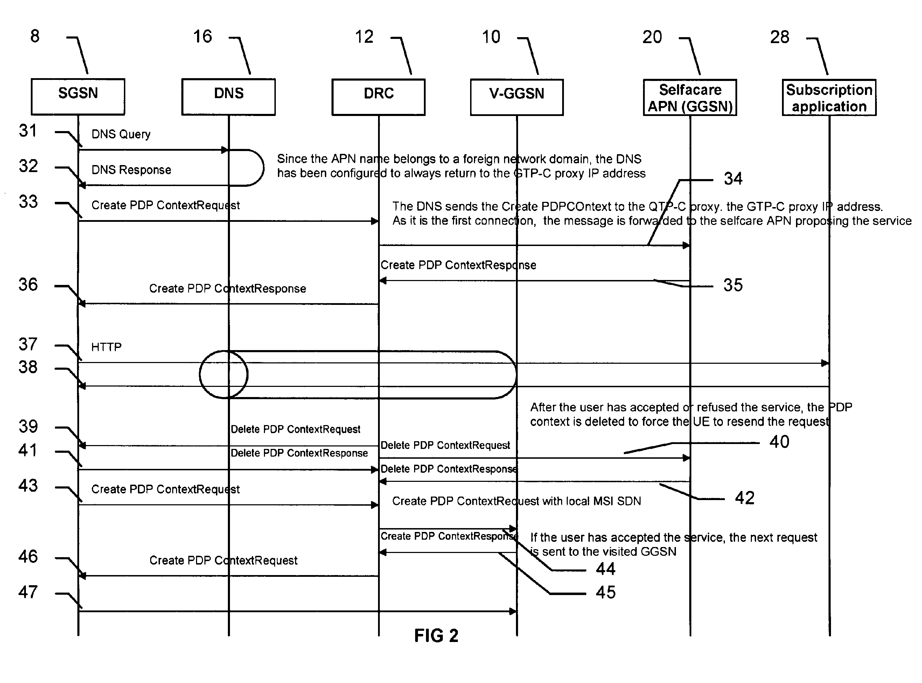

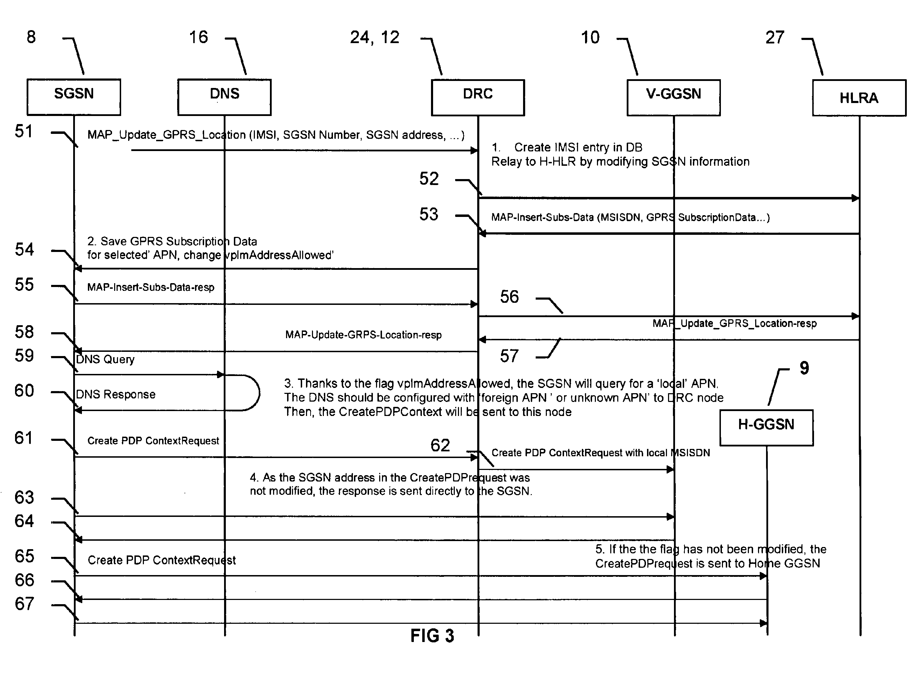

There is two mutually exclusive ways that can be considered to subscribe to the data roaming service. The first one is a previous subscription. In that case the user has already subscribed to the data roaming service of the visited network, and is allowed to use said service when the flow diagram of figure 2 or 3 start. In that case, the steps 34 to 41 of figure 2 can be removed. The second one concerns the case where no previous subscription exists. In that case the user can subscribe to the data roaming service by a "capture" or "on-the-fly-subscription. Said capture subscription is figured in steps 34 to 41 of figure 2. Corresponding steps could also have been added to the flow diagram of figure 3.

Preferably, the system checks said subscription, whatever the way said subscription have been contracted, before allowing said data roaming service.

Said checking is typically done by the visited telecom network 4 when the user's mobile set 2 connects to it or when it requests a data service. Said checking may necessitate an information exchange with either the home telecom network 3 or with a central subscription server of the data roaming system.

In case of a lack of existing subscription to said data roaming service or of a lack of sufficient credit left, the redirection to said visited gateway support node 10 cannot be activated. Instead the user's mobile set 2 may be redirected to an application allowing it to manage its subscription by either creating it or refunding it in order to provide credit.

This can be done, e.g. by having the tunnelling proxy 12 forcing a tunnel 22 setup toward an application designated by a particular access point name, denominated here as a selfcareaccess point name 20. Instead of the requested data service the user's mobile set 2 is thus connected with said selfcare application. It can there manage its subscription to the data roaming system, either creating it or consulting its credit or adding credit to its account.

At the end of a session with said selfcare access point name 20 and application, said forced tunnel 22 and/or the whole packet data protocol context associated is preferably deleted. Said clearing is an easy and efficient way to force the user's mobile set 2 to start another data service request. Said deletion of the forced tunnel and its context may be applied e.g. by said tunnelling proxy 12 or by any other component committed by said tunnelling proxy 12.

In order to operate said data roaming system, some information are requested by the visited telecom network 4 from the telecom network that has registered the user's mobile set 2 and manages its parameters, that is the home telecom network 3. Among other, a home location register 27, located in said home telecom network 3, manages parameters concerning said user's mobile set 2. Some information about location of a user's mobile set 2 may be so requested by a visited serving support node 8, when a user's mobile set 2 is connecting with it, from such a home location register 27. Said home location register 27 answers by sending, among other a profile of said user's mobile set, in what is called a mobility management signalling traffic 26. Such a mobility management signalling may e.g. use a Mobile Application Part, MAP, protocol.

In a preferred but non limitative embodiment, the data roaming system further comprises a signalling proxy 24. Said signalling proxy is e.g. located in said visited telecom network 4 and is in charge of intercepting said mobility management signalling traffic 26 coming from said home location register 27 and directed to said visited serving support node 8. The mobility management signalling traffic is then sent to its intended destination, said visited serving support node 8, but may be modified before.

The modification to the mobility management signalling traffic 26 consists in replacing, inside said mobility management signalling traffic, any foreign access point name 17 by a corresponding local access point name 18. Said modification thus provides access point names, designating the same data service, but in a format and syntax adapted to the local visited telecom network 4, so that it can be directly understood and handled by the visited gateway support node 10, when it receives it.

The insertion of such a signalling proxy 24, and the interception and modification applied to said mobility management signalling traffic 26, transforms a foreign access point name into a local access point name. Said mobility management signalling traffic 26 so modified forces a local resolution of an access point name by the visited serving support node 8 before it is forwarded to the visited gateway support node 10.

Using such a signalling proxy 24, allows for the tunnelling proxy 12 to be used only for the first message of a tunnelling traffic 14 that requests the creation of a packet data protocol context. All other following messages of said tunnelling traffic 14 are directly exchanged between the visited serving support node 8 and the visited gateway support node 10.

This advantageously allows the tunnelling proxy 12 to be activated/used only for a user's mobile set 2 that is allowed to access to the data roaming system, that is, a user that has subscribed to the service, and when it applies, has some credit left.

Although the several previously described embodiments may be applied in any network architecture, it can, among others, be applied in network architecture where the telecom protocol is general packet radio service, GPRS, the control tunnelling traffic protocol is GPRS tunnelling protocol control, GTP-C and the user tunnelling traffic protocol is GPRS tunnelling protocol user, GTP-U.

In a preferred embodiment, the packet data network 5, 6 is Internet, and the packet data protocol used is internet protocol, IP.

In a preferred embodiment, the mobility management signalling traffic26 comprises packets using transaction capabilities application part, TCAP, protocol.

Based on these preferred embodiments, using the wording of said protocols, an illustrative description is further given with respect to the flow diagrams of figures 2 and 3.

In these flow diagrams, each vertical line and box at its top figures a component of the system, referred to by the same reference number, while each horizontal line figures a traffic flow between two of these components.

The flow diagram of figure 2 details the sequencing of the method applied by an embodiment of the data roaming system comprising at least a tunnelling proxy 12.

The flow diagram of figure 3 details the sequencing of the method applied by an embodiment of the data roaming system additionally comprising a tunnelling proxy 12 and at least one signalling proxy 24.

With reference to figure 2, and from top to bottom, the method comprises the following steps. The visited serving GPRS support node 8, SGSN, has received a data service request, comprising an access point name 17, 18, APN, from a user's mobile set 2, and then intends to establish a connection to said data service. In a first step 31, said SGSN 8 sends a query based on said APN to a domain name server, 16, DNS. The APN is here supposed to refer to a foreign APN, 17. Consequently, in step 32, the modified DNS, 16, returns the IP address of the tunnelling proxy 12.

In a third step 33, said SGSN 8 sends a create packet data protocol, PDP, context request to the previously returned address, that is to the tunnelling proxy 12. Here, in step 33, the tunnelling proxy 12 is intercepting a message that the SGSN 8 intended to send directly to a visited gateway GPRS support node, 10, V-GGSN.

When receiving a create PDP context request, the tunnelling proxy 12 checks the type of the APN. The tunnelling proxy 12 only captures APN which gives a transparent access to the Internet, such as Web, Mail, etc.

The tunnelling proxy 12 also checks if the user's mobile set 2 has already subscribed to the service. This is done by fetching a subscriber database 28 to find if a MSISDN number is already present for the user's mobiles set.

In step 34, the tunnelling proxy 12, also referred by GPRS tunnelling protocol control proxy or GTP-C proxy, redirects the received create PDP context request to a modified IP address. Since it has been detected that it is the first connection of said user's mobile set 2, said address points toward a selfcare access point name 20, or a selfcare APN.

To allow a subscription to the data roaming service, a response is given to said request to the tunnelling proxy 12, in step 35. Said response is then transmitted to SGSN 8, in step 36.

Accordingly a tunnel is created based on this response. This tunnel connects SGSN 8 with a corresponding selfcare subscription management application 28. In steps 37 and 38, the SGSN 8 and the subscription application 28 exchange the necessary traffic to obtain a subscription for said user's mobile set 2, through said tunnel.

When this is done, and the subscription session is over, in steps 39 and 40, the tunnelling proxy 12 deletes the tunnel 22 and its PDP context, by sending messages to SGSN 8 and to selfcare APN 20. Said messages are respectively acknowledged in step 41 and 42.

Since the data service request from the user's mobile set 2 has not been serviced a new create PDP context request is sent by SGSN 8, in step 43. Said request is similar to the one sent in step 33. As in step 33, the tunnelling proxy 12 intercepts the message that the SGSN 8 intended to send directly to the V-GGSN 10.

In step 44 the tunnelling proxy 12 redirects the received create PDP context request to a modified IP address. Since, in the meantime, the user's mobile set 2 is supposed to have subscribed to the data roaming service, said modified IP address now points to V-GGSN 10.

Said V-GGSN 10 gives a response to said request to the tunnelling proxy 12, in step 45. Said response is then transmitted to SGSN 8, in step 46.

Following, a tunnel can be created between SGSN 8 and V-GGSN 10, as indicated by step 47.

With reference to figure 3, is detailed the operation of a data roaming system comprising a signalling proxy 24. The central line DRC concerns the system itself. It may be detailed as the signalling proxy 24 when considering steps 51-58, and as the tunnelling proxy 12 when considering steps 61-62. The operation comprises, from top to bottom, the following steps.

The visited serving GPRS support node 8, SGSN, is connected to a user's mobile set 2, and has received from it a data service request, comprising an access point name 17, 18, APN.

In a first step 51, said SGSN 8 sends a mobility management signalling traffic 26 intended to an home location register, 27, HLR, in order to receive a location profile of said user's mobile set 2. Said mobility management signalling traffic 26 may comprise a MAP_UPDATE_GPRS_LOCATION message.

Due to its mobility management signalling nature, said message is intercepted by a signalling proxy 24. Said signalling proxy 24 modifies the message. The modification consists, among others, in changing in APN related parameters, the SGSN address. At the same time, the signalling proxy creates a local IMSI entry for said user's mobile set 2 in a database of said visited telecom network 4.

In step 52, the modified message is forwarded to its intended destination, the HLR 27.

In step 53 said HLR 27 answers by a MAPS_INSERT_SUBS_DATA message. Due to its nature said message is also intercepted by said signalling proxy 24.

Here the signalling proxy 24 modifies in the PDP context information an Address Allowed flag. The signalling proxy 24 intercepts all the MAP_INSERT_SUBS_DATA messages coming from the HLR 27 that contains the profile of said specific user's mobile set 2, including the GPRS profile. This profile indicates if an APN can be resolved locally or not. The signalling proxy 24 than intercepts said message and forces the Address Allowed flag to resolve locally.

An access point name, APN, comprises the following parts: a Network Identifier and an Operator Identifier. The Network Identifier points to an access point within a GPRS telecom network. The Operator Identifier points to a GPRS telecom network, such as e.g. the home telecom network 3 or the visited telecom network 4. A telecom network 3, 4 is typically a public land mobile network, PLMN.

Normally, only the Network Identifier should be used by the user's mobile set 2. The Operator Identifier should be set by the visited gateway support node 10 under the control of the home telecom network 3. This control is done through said Address Allowed flag in the user's mobile set profile sent by the HLR 27 to SGSN8. According to said flag a tunnel is built to either V-GGSN 10 or H-GGSN 9.

In step 54, said modified message with the forced flag is forwarded to its intended destination, SGSN 8.

This results in said SGSN 8 extending the local operator ID instead of the home operator ID while computing the full APN.

In step 55, SGSN 8 sends a response to said MAP_INSERT_SUBS_DATA message. Said message is intercepted by said signalling proxy 24, and forwarded, in step 56 to said HLR 27. In step 57, the HLR 27 responds with a MAP_UPDATE_GPRS_LOCATION response message. Said message is intercepted by the signalling proxy 24, and forwarded, in step 58 to said SGSN 8.

Said SGSN 8 has now the necessary profile information, and can initiate a tunnel building. This starts in step 59, similar to step 31 of figure 2, where SGSN 8 sends a query based on the APN to a DNS, 16.

The APN is here, in a first time, supposed to refer to a local APN 18. Consequently, the Address Allowed flag has been previously modified by the signalling proxy 24, and SGSN 8 queries for a local APN 18.

In response, in step 60, the DNS 16 returns the IP address of the tunnelling proxy 12.

In step 61, similar to step 33, SGSN 8 sends a create PDP context request to the previously retuned address, that is to the tunnelling proxy 12.

Here, as in step 33, the tunnelling proxy 12 intercepts said message.

In step 62, similar to step 44, the tunnelling proxy 12, redirects the received create PDP context request to a modified IP address. Since the user's mobile set 2 is now supposed to have subscribed to the data roaming service, said modified IP address now points to said V-GGSN 10.

Said V-GGSN 10 gives a response to said request, in step 63. Since the SGSN address has not been modified, said response is directly sent to SGSN 8.

Following, 3a tunnel can be created between SGSN 8 and V-GGSN 10, as indicated by step 64.

Let us return back now to steps 59 and 60, and let us assume that the APN is now, in a second time, a foreign APN 17. Consequently, the Address Allowed flag has not been previously modified by the signalling proxy 24. Consequently, the DNS query in step 59 receives in step 60 an IP address pointing to the home GGSN 9, H-GGSN.

Consequently, in step 65, SGSN 8 sends a create PDP context request to the previously retuned address, that is directly to the H-GGSN 9. Here, in case of a foreign APN, the tunnelling proxy 12 does not intercept said message. It can be noted that, the use of a signalling proxy 24, limits the intercepting action of the tunnelling proxy 12 to the case of a local APN 18, when said tunnelling proxy 12 provides an added value by modifying the traffic content.

Said H-GGSN 9 gives a response to said request, in step 66, directly sent to SGSN 8.

Following, a tunnel can be created between SGSN 8 and H-GGSN 9, as indicated by step 67.

While there is shown and described the present preferred embodiment of the invention, it is to be distinctly understood that this invention is not limited thereto but may be variously embodied to practice within the scope of the following claims.

## Claims

1. A data roaming system, DRC, in a telecom network infrastructure, to allow a user's mobile set (2), registered with a home telecom network (3), to get access to a network service offered by a packet data network (5, 6), through a visited telecom network (4), comprising:
- a visited serving support node (8), located in said visited telecom network (4), adapted to establish a connection with said user's mobile set (2), and to communicate with it using a telecom protocol,
- a visited gateway support node (10), located in said visited telecom network (4), adapted to interwork the visited telecom network (4) with the packet data network (6), that is, to bi-directionally translate and exchange traffic between said telecom protocol used by the visited telecom network (4) and a packet data protocol used by said packet data network (6),
- a home gateway support node (9), located in said home telecom network (3), adapted to interwork the home telecom network (3) with the packet data network (5), that is, to bi-directionally translate and exchange traffic between said telecom protocol used by home telecom network (3) and a packet data protocol used by said packet data network (5),
***characterized in that*** it further comprises:
- a tunnelling proxy (12) located in said visited telecom network (4), adapted to intercept a control tunnelling traffic (14) coming from said visited serving support node (8) and to redirect it either to said visited gateway support node (10) or to said home gateway support node (9).

2. The system of claim 1, further comprising:
a first domain name server (16) looked up by said visited serving support node (8) modified the following way:
- a look-up from the visited serving support node (8) to a local access point name (18), that is, an access point name (18) whose name can be resolved locally in the visited telecom network (4), is resolved into a visited gateway support node (10) address,
- a look-up from the visited serving support node (8) to a foreign access point name (17) is resolved into a tunnelling proxy(12) address,
and a second domain name server (16) looked up by said tunnelling proxy (12) modified the following way:
- a look-up from the tunnelling proxy (12) to a foreign access point name (17) is resolved into a home gateway support node (9) address,
in order to allow said interception of tunnelling traffic.

3. The system according to any one of the preceding claims, wherein said tunnelling proxy (12) is further adapted to modify the access point name (18) requested by the user's mobile set (2), so that it designates the same data service, but in a format understandable by said visited gateway support node (10), at least while control tunnelling traffic (14) is redirected to said visited gateway support node (10).

4. The system according to any one of the preceding claims, wherein said tunnelling proxy (12) is further adapted to replace the Mobile Station Integrated Services Digital Network Number (MSISDN number) of the user's mobile set (2) to a visited MSISDN number, at least while control tunnelling traffic (14) is redirected to said visited gateway support node (10).

5. The system according to any one of the preceding claims, wherein said tunnelling proxy (12)is further adapted to force a tunnel (22) setup toward a selfcare access point name (20) in charge of managing subscription and credit of the user's mobile set (2), if said user's mobile set (2) has not yet subscribed to the data roaming system or has no more credit.

6. The system according to the preceding claim, wherein said tunnelling proxy (12) is further adapted to delete said forced tunnel (22) at the end of a session with said selfcare access point name (20).

7. The system according to any one of the preceding claims, further comprising:
a signalling proxy (24) located in said visited telecom network (4), able to intercept mobility management signalling traffic (26) coming from a home location register (27) to said visited serving support node (8), and to replace herein any foreign access point name (17) by a corresponding local access point name (18) that can be understood and handled by said visited gateway support node (10).

8. The system according to any one of the preceding claims, wherein the telecom protocol is general packet radio service, GPRS, and the control tunnelling traffic protocol is GPRS tunnelling protocol, GTP-C.

9. The system according to any one of the preceding claims, wherein the packet data network (5, 6) is Internet, and the packet data protocol used is internet protocol, IP.

10. The system according to any one of the preceding claims, wherein the mobility management signalling traffic (26) comprises packets using transaction capabilities application part, TCAP, protocol.

11. Method of data roaming in a telecom network infrastructure, to allow a user's mobile set (2), registered with a home telecom network (3), to get access to a network service, such as the ones offered by a packet data network (5, 6), through a visited telecom network (4), comprising the following steps:
- establishing a connection with said user's mobile set (2) through a visited serving support node (8) located in said visited telecom network (4), and communicating with said user's mobile set (2) using a telecom protocol,
- interworking the visited telecom network (4) with the packet data network (6) through a visited gateway support node (10) located in said visited telecom network (4), which comprises bi-directionally translating and exchanging traffic between said telecom protocol used by visited telecom network (4) and a packet data protocol used by said packet data network (6),
- interworking the home telecom network (3) with the packet data network (5) through a home gateway support node (9) located in said home telecom network (3), which comprises bi-directionally translating and exchanging traffic between said telecom protocol used by home telecom network (3) and a packet data protocol used by said packet data network (5), ***characterized in that*** it further comprises the following steps:
- intercepting control tunnelling traffic (14) coming from said visited serving support node (8) through a tunnelling proxy (12) located in said visited telecom network (4), and redirecting said control tunnelling traffic (14) either to said visited gateway support node (10) or to said home gateway support node (9).

## Patentansprüche

1. Daten-Roamingsystem DRC in einer Telekom-Netzwerkinfrastruktur, um einem mobilen Gerät eines Nutzers (2), das in einem Heim-Netzwerk (3) registriert ist, den Zugang zu einem Netzwerkdienst, der von einem Paket-Datennetzwerk (5, 6) angeboten wird, durch ein besuchtes Telekomnetzwerk (4) zu ermöglichen, umfassend:
- einen besuchten Serving Supporting Node (8), der in dem genannten besuchten Telekomnetzwerk (4) lokalisiert ist, der angepasst ist, um eine Verbindung mit dem genannten mobilen Gerät eines Nutzers (2) herzustellen und unter Nutzung eines Telekomprotokolls damit zu kommunizieren,
- einen besuchten Gateway Supporting Node (10), der in dem genannten besuchten Telekomnetzwerk (4) lokalisiert ist, der angepasst ist, um das besuchte Telekomnetzwerk (4) mit dem Paket-Datennetzwerk (6) interagieren zu lassen, das heißt, Verkehr zwischen dem genannten Telekomprotokoll, das von dem besuchten Telekomnetzwerk (4) verwendet wird, und einem Paket-Datenprotokoll, das von dem genannten Paket-Datennetzwerk (6) verwendet wird, bidirektional zu übersetzen und auszutauschen,
- einen Heim-Gateway Supporting Node (9), der in dem genannten Heim-Telekomnetzwerk (3) lokalisiert ist, der angepasst ist, um das Heim-Telekomnetzwerk (3) mit dem Paket-Datennetzwerk (5) interagieren zu lassen, das heißt, Verkehr zwischen dem genannten Telekomprotokoll, das vom Heim-Telekomnetzwerk (3) verwendet wird, und einem Paket-Datenprotokoll, das von dem genannten Paket-Datennetzwerk (5) verwendet wird, bidirektional zu übersetzen und auszutauschen,
**dadurch gekennzeichnet, dass** es weiterhin umfasst:
- einen Tunnelproxy (12), der in dem genannten besuchten Telekomnetzwerk (4) lokalisiert ist, der angepasst ist, um einen Kontroll-Tunnelverkehr (14) abzufangen, der von dem genannten besuchten Serving Support Node (8) stammt, und ihn entweder an den genannten besuchten Gateway Supporting Node (10) oder an den genannten Home Gateways Supporting Node (9) zurückzuleiten.

2. System gemäß Anspruch 1, weiterhin umfassend:
einen ersten Domänen-Namenserver (16), der von dem genannten besuchten Serving Supporting Node (8) durchsucht wird, der auf die folgende Weise abgeändert ist:
- ein Durchsuchen von dem besuchten Serving Supporting Node (8) zu einem lokalen Zugangspunktnamen (18), das heißt, einem Zugangspunktnamen (18), dessen Name lokal in dem besuchten Telekomnetzwerk (4) gelöst werden kann, in eine Adresse eines besuchten Gateway Supporting Nodes (10) gelöst wird,
- ein Durchsuchen des besuchten Serving Supporting Nodes (8) zu einem fremden Zugangspunktnamen (17) wird in eine Adresse eines Tunnelproxys (12) gelöst,
und einen zweiten Domänenserver (16), der durch den genannten Tunnelproxy (12) durchsucht wird, der durch die folgende Weise geändert wird;
- ein Durchsuchen von dem Tunnelproxy (12) zu einem fremden Zugangspunktnamen (17) wird in einer Adresse eines Heim-Gateway Supporting Nodes (9) gelöst, um das genannte Abfangen eines Tunnelverkehrs zu ermöglichen.

3. System gemäß einem der voranstehenden Ansprüche, bei dem der genannte Tunnelproxy (12) weiterhin angepasst ist, um den Zugangspunktnamen (18) zu ändern, der vom mobilen Gerät eines Nutzers (2) angefordert wird, so dass er denselben Datendienst bezeichnet, jedoch in einem Format, das für den besuchten Gateway Supporting Node (10) verständlich ist, und zwar wenigstens während der Kontroll-Tunnelverkehr (14) zu genanntem Gateway Supporting Node (10) zurückgeleitet wird.

4. System gemäß einem der voranstehenden Ansprüche, bei dem der Tunnelproxy (12) weiterhin angepasst ist, um die Mobile Station Integrated Services Digital Network Number (MSISDN-Nummer) des mobilen Geräts eines Nutzers (2) in eine besuchte MSISDN-Nummer zu ersetzen, und zwar wenigstens während der Kontroll-Tunnelverkehr (14) zu genanntem besuchten Gateway Supporting Node (10) umgeleitet wird.

5. System gemäß einem der voranstehenden Ansprüche, bei dem der genannte Tunnelproxy (12) weiterhin angepasst ist, um ein Setup eines Tunnels (22) zu einem Selfcare-Zugangspunktnamen (20) zu erzwingen, der mit der Verwaltung des Abonnements und des Guthabens des mobilen Geräts eines Nutzers (2) beauftragt ist, wenn das genannte mobile Gerät eines Nutzers (2) noch nicht das Daten-Roamingsystem abonniert hat oder kein Guthaben mehr hat.

6. System gemäß dem voranstehenden Anspruch, bei dem der genannte Tunnelproxy (12) weiterhin angepasst ist, um den genannten erzwungenen Tunnel (22) am Ende einer Sitzung mit dem genannten Selfcare-Zugangspunktnamen (20) zu löschen.

7. System gemäß einem der voranstehenden Ansprüche, weiterhin umfassend:
einen Signalproxy (24), der in dem genannten Telekomnetzwerk (4) lokalisiert ist, der in der Lage ist, einen Mobilitätsmanagement-Signalverkehr (26) abzufangen, der von einer Heim-Teilnehmerdatei (27) zu dem genannten besuchten Serving Supporting Node (8) kommt, und hierin jeglichen fremden Zugangspunktnamen (17) durch einen entsprechenden lokalen Zugangspunktnamen (18) zu ersetzen, der von dem genannten besuchten Gateway Supporting Node (10) verstanden und verarbeitet werden kann.

8. System gemäß einem der voranstehenden Ansprüche, bei dem das Telekomprotokoll ein General Packet Radio Service GPRS ist und das Kontrolltunnel-Verkehrsprotokoll das GPRS-Tunnelprotokoll GTP-C ist.

9. System gemäß einem der voranstehenden Ansprüche, bei dem das Paket-Datennetzwerk (5, 6) das Internet ist und das verwendete Paket-Datenprotokoll das Internetprotokoll IP ist.

10. System gemäß einem der voranstehenden Ansprüche, bei dem der Mobilitätsmanagement-Signalverkehr (26) Pakete umfasst, die das Protokoll Transaction Capabilities Application Part, TCP verwenden.

11. Verfahren zum Datenroaming in einer Telekomnetzwerk-Infrastruktur, um einem mobilen Gerät eines Nutzers (2), das in einem Heim-Telekomnetzwerk (3) registriert ist, den Zugang zu einem Netzwerkdienst, wie z. B. denen, die von einem Paket-Datennetzwerk (5, 6) angeboten werden, durch ein besuchtes Telekomnetzwerk (4) zu ermöglichen, umfassend die folgenden Schritte:
- Herstellen einer Verbindung mit dem genannten mobilen Gerät eines Nutzers (2) durch einen besuchten Serving Supporting Node (8), der in dem genannten besuchten Telekomnetzwerk (4) lokalisiert ist, und Kommunikation mit dem genannten mobilen Gerät eines Nutzers (2), das ein Telekomprotokoll verwendet,
- Interagieren zwischen dem besuchten Telekomnetzwerk (4) und dem Paket-Datennetzwerk (6) durch einen besuchten Gateway Supporting Node (10), der in dem genannten besuchten Telekomnetzwerk (4) lokalisiert ist, was das bidirektionale Übersetzen und Austauschen von Verkehr zwischen dem genannten Telekomprotokoll umfasst, das von dem besuchten Telekomnetzwerk (4) verwendet wird, und einem Datenprotokoll, das von dem genannten Paket-Datennetzwerk (6) verwendet wird,
- Interagieren zwischen dem Heim-Telekomnetzwerk (3) und dem Paket-Datennetzwerk (5) durch einen Heim-Gateway Supporting Node (9), der in dem genannten Heim-Telekomnetzwerk (3) lokalisiert ist, was einen bidirektionale Übersetzen und Austauschen von Verkehr zwischen dem genannten Telekomprotokoll, das vom Heim-Telekomnetzwerk (3) verwendet wird, und einem Paket-Datenprotokoll, das von dem genannten Paket-Datennetzwerk (5) verwendet wird, umfasst,
**dadurch gekennzeichnet, dass** es weiterhin folgende Schritte umfasst:
- Abfangen des Kontrolltunnelverkehrs (14), der von dem genannten besuchten Serving Supporting Node (8) durch einen Tunnelproxy (12) kommt, der in dem genannten besuchten Telekomnetzwerk (4) lokalisiert ist, und Weiterleiten des genannten besuchten Kontrolltunnelverkehrs (14) entweder zu dem genannten Gateway Supporting Node (10) oder zu dem genannten Home Gateway Supporting Node (9).

## Revendications

1. Système pour itinérance de données, DRC, dans une infrastructure de réseau de télécommunication, destiné à permettre à un appareil téléphonique mobile d'utilisateur (2) enregistré auprès d'un réseau de télécommunication domestique (3), d'avoir accès à un service de réseau offert par un réseau de données par paquets (5, 6), par l'intermédiaire d'un réseau de télécommunication visité (4), comprenant :
- un noeud de support de service visité (8), situé dans ledit réseau de télécommunication visité (4), conçu pour établir une connexion avec ledit appareil téléphonique mobile d'utilisateur (2), et pour communiquer avec celui-ci en utilisant un protocole de télécommunication,
- un noeud de support de passerelle visité (10), situé dans ledit réseau de télécommunication visité (4), conçu pour faire interfonctionner le réseau de télécommunication visité (4) avec le réseau de données par paquets (6), c'est-à-dire pour effectuer des translations bidirectionnelles et échanger un trafic entre ledit protocole de télécommunication utilisé par le réseau de télécommunication visité (4) et un protocole de données par paquets utilisé par ledit réseau de données par paquets (6),
- un noeud de support de passerelle domestique (9), situé dans ledit réseau de télécommunication domestique (3), conçu pour faire interfonctionner le réseau de télécommunication domestique (3) avec le réseau de données par paquets (5), c'est-à-dire pour effectuer des translations bidirectionnelles et échanger un trafic entre ledit protocole de télécommunication utilisé par le réseau de télécommunication domestique (3) et un protocole de données par paquets utilisé par ledit réseau de données par paquets (5),
**caractérisé en ce qu'**il comprend, en outre :
- un proxy de tunnelisation (12) situé dans ledit réseau de télécommunication visité (4), conçu pour intercepter un trafic de tunnelisation de commande (14) en provenance dudit noeud de support de service visité (8) et pour rediriger celui-ci soit vers ledit noeud de support de passerelle visité (10) soit vers ledit noeud de support de passerelle domestique (9).

2. Système selon la revendication 1, comprenant en outre :
un premier serveur de nom de domaine (16) consulté par ledit noeud de support de service visité (8) modifié de la façon suivante :
- une conversion du noeud de support de service visité (8) en un nom de point d'accès local (18), c'est-à-dire un nom de point d'accès (18) dont le nom peut être résolu localement dans le réseau de télécommunication visité (4), est résolue en une adresse de noeud de support de passerelle visité (10),
- une conversion du noeud de support de service visité (8) en un nom de point d'accès à l'étranger (17) est résolue en une adresse de proxy de tunnelisation (12),
et un second serveur de nom de domaine (16) consulté par ledit proxy de tunnelisation (12) modifié de la façon suivante :
- une conversion du proxy de tunnelisation (12) en un nom de point d'accès à l'étranger (17) est résolue en une adresse de noeud de support de passerelle domestique (9),
afin de permettre ladite interception du trafic de tunnelisation.

3. Système selon l'une quelconque des revendications précédentes, dans lequel ledit proxy de tunnelisation (12) est en outre conçu pour modifier le nom de point d'accès (18) demandé par l'appareil téléphonique mobile d'utilisateur (2), de telle sorte qu'il désigne le même service de données, mais dans un format qui peut être compris par ledit noeud de support de passerelle visité (10), au moins pendant que le trafic de tunnelisation de commande (14) est redirigé vers ledit noeud de support de passerelle visité (10).

4. Système selon l'une quelconque des revendications précédentes, dans lequel ledit proxy de tunnelisation (12) est en outre conçu pour remplacer le Numéro de Réseau Numérique à Intégration de Services de la Station Mobile (numéro MSISDN) de l'appareil téléphonique mobile d'utilisateur (2) par un numéro MSISDN visité, au moins pendant que le trafic de tunnelisation de commande (14) est redirigé vers ledit noeud de support de passerelle visité (10).

5. Système selon l'une quelconque des revendications précédentes, dans lequel ledit proxy de tunnelisation (12) est en outre conçu pour forcer l'établissement d'un tunnel (22) en direction d'un nom de point d'accès autonome (20) en charge de la gestion de l'abonnement et du crédit de l'appareil téléphonique mobile d'utilisateur (2), si ledit appareil téléphonique mobile d'utilisateur (2) ne s'est pas encore abonné au système d'itinérance de données ou ne dispose plus de crédit.

6. Système selon la revendication précédente, dans lequel ledit proxy de tunnelisation (12) est en outre conçu pour supprimer ledit tunnel forcé (22) à la fin d'une session avec ledit nom de point d'accès autonome (20).

7. Système selon l'une quelconque des revendications précédentes, comprenant en outre :
un proxy de signalisation (24) situé dans ledit réseau de télécommunication visité (4), capable d'intercepter le trafic de signalisation de la gestion de la mobilité (26) en provenance d'un enregistreur de localisation nominal (27) vers ledit noeud de support de service visité (8), et de remplacer dans celui-ci tout nom de point d'accès à l'étranger (17) par un nom de point d'accès local (18) correspondant qui peut être compris et traité par ledit noeud de support de passerelle visité (10).

8. Système selon l'une quelconque des revendications précédentes, dans lequel le protocole de télécommunication est un service général de radiocommunication en mode paquet, le GPRS, et le protocole de trafic de tunnelisation de commande est le protocole de tunnelisation GPRS, le GTP-C.

9. Système selon l'une quelconque des revendications précédentes, dans lequel le réseau de données par paquets (5, 6) est Internet, et le protocole de données par paquets utilisé est le protocole Internet, IP.

10. Système selon l'une quelconque des revendications précédentes, dans lequel le trafic de signalisation de la gestion de la mobilité (26) comprend des paquets utilisant un protocole de sous-système de gestion de transaction, le TCAP.

11. Procédé d'itinérance de données dans une infrastructure de réseau de télécommunication, destiné à permettre à un appareil téléphonique mobile d'utilisateur (2), enregistré auprès d'un réseau de télécommunication domestique (3), d'avoir accès à un service de réseau, tel que ceux offerts par un réseau de données par paquets (5, 6), par l'intermédiaire d'un réseau de télécommunication visité (4), comprenant les étapes suivantes :
- établir une connexion avec ledit appareil téléphonique mobile d'utilisateur (2) par l'intermédiaire d'un noeud de support de service visité (8) situé dans ledit réseau de télécommunication visité (4), et communiquer avec ledit appareil téléphonique mobile d'utilisateur (2) en utilisant un protocole de télécommunication,
- faire interfonctionner le réseau de télécommunication visité (4) avec le réseau de données par paquets (6) par l'intermédiaire d'un noeud de support de passerelle visité (10) situé dans ledit réseau de télécommunication visité (4), qui comprend la réalisation de translations bidirectionnelles et l'échange de trafic entre ledit protocole de télécommunication utilisé par le réseau de télécommunication visité (4) et un protocole de données par paquets utilisé par ledit réseau de données par paquets (6),
- faire interfonctionner le réseau de télécommunication domestique (3) avec le réseau de données par paquets (5) par l'intermédiaire d'un noeud de support de passerelle domestique (9) situé dans ledit réseau de télécommunication domestique (3), qui comprend la réalisation de translations bidirectionnelles et l'échange de trafic entre ledit protocole de télécommunication utilisé par le réseau de télécommunication domestique (3) et un protocole de données par paquets utilisé par ledit réseau de données par paquets (5),
**caractérisé en ce qu'**il comprend en outre les étapes suivantes :
- intercepter un trafic de tunnelisation de commande (14) en provenance dudit noeud de support de service visité (8) par l'intermédiaire d'un proxy de tunnelisation (12) situé dans ledit réseau de télécommunication visité (4), et rediriger ledit trafic de tunnelisation de commande (14) soit vers ledit noeud de support de passerelle visité (10) soit vers ledit noeud de support de passerelle domestique (9).
